**Europäisches Patentamt**

**European Patent Office**

**Office européen des brevets**

(11) Numéro de publication : **0 186 553
B1**

(12) **FASCICULE DE BREVET EUROPÉEN**

(45) Date de publication du fascicule du brevet :
15.06.88

(21) Numéro de dépôt : 85402330.6

(22) Date de dépôt : 27.11.85

(51) Int. Cl.⁴ : **B 60 G 11/12**

(54) **Articulation pour la fixation d'un ressort à lames, notamment pour véhicules industriels.**

(30) Priorité : 30.11.84 FR 8418254

(43) Date de publication de la demande :
02.07.86 Bulletin 86/27

(45) Mention de la délivrance du brevet :
15.06.88 Bulletin 88/24

(84) Etats contractants désignés :
**DE GB IT SE**

(56) Documents cités :
**DE-U- 1 909 898
US-A- 1 992 981
US-A- 4 003 562
US-A- 4 270 759**

(73) Titulaire : **RENAULT VEHICULES INDUSTRIELS
Société Anonyme dite:
129 rue Servient "La Part Dieu"
F-69003 Lyon (FR)**

(72) Inventeur : **Moscicki, Christian
Le Varvaray
F-38790 Charantonnay (FR)**

(74) Mandataire : **Réal, Jacques
Régie Nationale des Usines Renault SCE 0804
F-92109 Boulogne Billancourt Cedex (FR)**

Jouve, 18, rue St-Denis, 75001 Paris, France

## Description

La présente invention se rapporte à une articulation pour la fixation d'un ressort à lames, notamment pour véhicules industriels.

On utilise actuellement différents types d'articulations qui présentent un certain nombre d'inconvénients :

— besoin d'usiner les extrémités du ressort obtenu brut de fabrication et/ou des pièces complémentaires nécessaires à l'attache, déterminant le jeu latéral de la fixation.

— empilage de nombreuses pièces, difficile à réaliser au moment du montage.

— fixation de l'articulation au moyen de filetage, solution chère et longueur de temps de montage.

— utilisation de deux demi-axes à rotule, cette dernière étant située dans la ferrure de maintien du ressort, serrés dans l'œil de ce dernier par l'extérieur de ladite ferrure de maintien, solution impliquant des difficultés d'assemblage, notamment du fait du manque d'accessibilité dans certains cas de réalisation du châssis.

On connaît du brevet US 1.992.981 une articulation pour la fixation d'un ressort à lames, notamment pour véhicules industriels, dans laquelle chaque extrémité du ressort à lames conformée en boucle est pourvue d'une bague emmanchée à force, dans laquelle se trouve un axe mobile en rotation, cet ensemble autonome étant solidarisé au châssis par l'intermédiaire d'une chape dont les ailes sont réalisées en forme de pince dont les bords peuvent être serrés par un boulon.

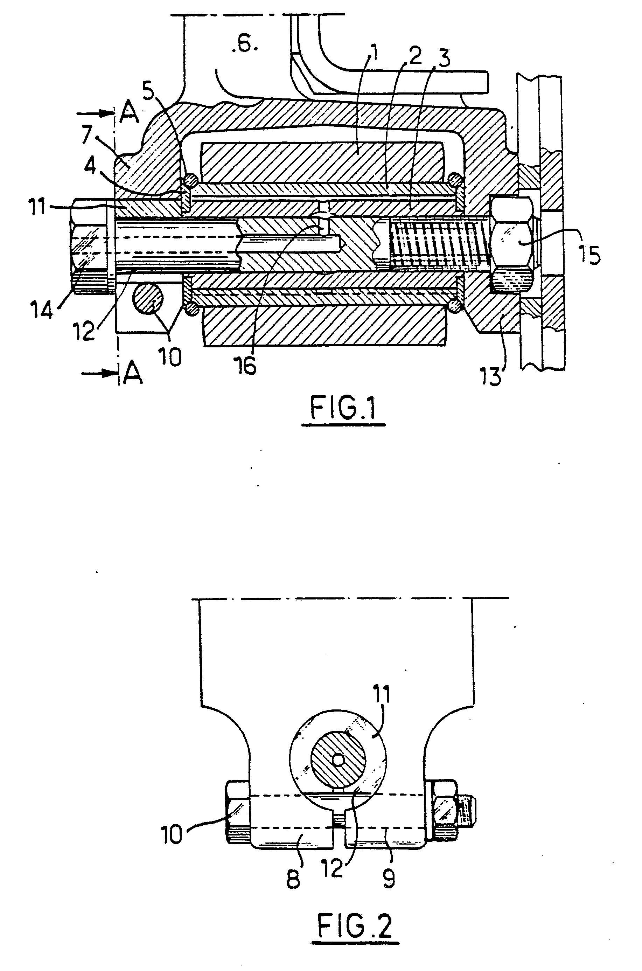

La présente invention, qui sera décrite à titre d'exemple non limitatif au regard des figures 1 à 2 ci-jointes, a pour but de pallier les difficultés propres aux articulations antérieures déjà évoquées et en particulier d'accroître leur rigidité et elle est caractérisée par le fait que, aux extrémités de l'axe, sont serties des coupelles, et qu'à l'intérieur de ladite pince est logée une entretoise fendue au droit de la fente séparant lesdits bords, l'entretoise comportant un méplat permettant le passage dudit boulon qui immobilise en rotation ladite entretoise lors du serrage de la vis.

La figure 1 est une coupe transversale de l'articulation au niveau de la fixation d'une extrémité du ressort.

La figure 2 est une coupe selon A.A de la figure 1.

En référence à la figure 1, on voit en coupe transversale l'une des deux extrémités 1 d'un ressort à lames au niveau de sa fixation à la caisse du véhicule. Ladite extrémité 1 du ressort est conformée en une boucle, ou œil du ressort, à l'intérieur de laquelle est emmanchée à force une bague métallique 2 ; mobile en rotation par rapport à cette dernière est alors disposé un axe 3 aux extrémités duquel sont serties les coupelles 4 prenant en charge les efforts transversaux en provenance de la lame de ressort. A la jonction de ces dernières et des extrémités de la bague 2 on réalise des chanfreins qui servent de logements à deux joints toriques 5, assurant ainsi l'étanchéité entre l'ensemble mobile constitué par l'axe 3 et les coupelles 4 d'une part, la bague 2 et l'œil 1 du ressort d'autre part.

Naturellement, ce qui vient d'être décrit pour l'une des extrémités du ressort est valable pour l'autre. L'opération ci-dessus terminée, on obtient un ensemble autonome constitué par le ressort et les pièces constituant ses fixations, qui peut être aisément manutentionné, sans risque de perte des pièces le constituant.

Le montage de cet ensemble sur le châssis du véhicule est simplifié du fait que l'assemblage précédent est effectué hors chaîne.

La pièce liée au châssis destinée à recevoir les extrémités 1 du ressort est constituée par une ferrure 6 en forme de chape, dont l'aile externe 7 est réalisée en forme de pince, dont les deux bords 8 et 9 peuvent être serrés au moyen d'un boulon 10. A l'intérieur de la pince constituée par l'aile externe 7 est logée une entretoise fendue au droit de la fente séparant les bords 8-9, qui comporte un méplat 12 permettant le passage du boulon 10 l'arrêtant en rotation.

L'aile interne 13 de la chape 6 est percée, permettant ainsi le passage de l'extrémité d'une vis 14 coopérant avec un écrou 15 de serrage prévu à cet effet sur la face externe de l'aile 13. La solidarisation de l'extrémité 1 du ressort de la chape s'effectue par compression au moyen de la vis 14 et de l'écrou 15 de l'entretoise 11 et de l'aile 13 de la chape sur les coupelles 4 de l'axe 3 qui se trouve immobilisé. On serre alors la vis 10, ce qui a pour effet de comprimer l'entretoise 11 sur la vis 14, l'encastrant ainsi dans l'aile 7 de la chape 6. De l'encastrement précédent des extrémités de la vis 14 résulte une augmentation de la rigidité de montage.

En variante, on pourra monter l'extrémité du ressort 1 et son articulation dans une forme souple en forme de chape 6 analogue à la représentation précédente dont toutefois les ailes 7-13 permettent une déformation élastique sous l'action du serrage de la vis 14.

On notera toutefois que dans tous les cas après le serrage de la vis 14, l'extrémité 1 du ressort et la bague 2 qui lui est solidaire demeurent mobiles en rotation sur l'axe 3.

Afin de soulager la vis 14 des cisaillements résultant des efforts longitudinaux et verticaux en provenance de la lame, les faces des coupelles 4 en regard des ailes 7-13 de la chape 6 sont pourvues d'un crantage en forme de couronne concentrique et de section triangulaire en relief. Sous l'effet du serrage provoqué par la vis 14, il s'incruste dans les ailes 7-13 et/ou dans l'entretoise 11, leur transmettant ainsi les efforts ci-dessus ; le crantage se recentre automatiquement lors des démontages et remontages successifs de l'articulation dans la chape 6. L'étanchéité entre les coupelles fixes 4 et la bague mobile 2 étant réalisée par les joints toriques 5, l'articulation peut être graissée à vie au moyen d'une réserve de lubrifiant emmagasiné dans la bague 2.

Toutefois, dans le cas d'une utilisation sévère, un graissage d'entretien peut être prévu en disposant un graisseur 16 sur la vis 14 ; le lubrifiant transite alors à l'intérieur de cette dernière et traverse l'axe 3, pour atteindre les surfaces actives de l'articulation.

**Revendications**

1. Articulation pour la fixation d'un ressort à lames, notamment pour véhicules industriels, dans laquelle chaque extrémité (1) du ressort à lames, conformé en boucle, est pourvue d'une bague (2) emmanchée à force, dans laquelle bague on dispose, mobile en rotation un axe (3), cet ensemble autonome étant solidarisé au châssis par l'intermédiaire d'une chape (6) dont l'aile externe (7) est réalisée en forme de pince, les bords (8-9) de ladite pince pouvant être serrés par un boulon (10), caractérisé par le fait que aux extrémités de l'axe (3) sont serties des coupelles (4), et qu'à l'intérieur de ladite pince est logée une entretoise (11) fendue au droit de la fente séparant lesdits bords (8-9), l'entretoise (11) comportant un méplat (12) permettant le passage dudit boulon (10) qui immobilise en rotation ladite entretoise (11) lors du serrage de la vis (14).

2. Articulation selon la revendication 1, caractérisée en ce que l'axe (3) et les coupelles (4) sont immobilisés en rotation par serrage de l'entretoise (11) et de l'axe (13) au moyen d'une vis (14) traversant l'entretoise (11), l'axe (3) et l'aile opposée (13), sur la face extérieure de laquelle est placé un écrou (15).

3. Articulation selon les revendications 1 et 2, caractérisée en ce que les coupelles (4) présentent sur leur face en contact avec les ailes (7-13) et l'entretoise (11) un crantage en forme de couronne concentrique, de section triangulaire et en relief.

4. Articulation selon la revendication 1, caractérisée en ce qu'un chanfrein est ménagé à la jonction des coupelles (4) et des extrémités de la bague (2), servant de logement à des joints toriques (5), ceux-ci assurant l'étanchéité entre ces deux pièces en mouvement relatif, permettant ainsi le maintien d'une réserve de lubrifiant à l'intérieur de la bague (2).

5. Articulation selon la revendication 1, caractérisée en ce que les ailes (7-13) de la chape (6) présentent une souplesse autorisant une déformation élastique sous l'action du serrage de la vis (14).

**Claims**

1. A pivot mounting for fixing a blade spring, in particular for industrial vehicles, in which each end (1) of the blade spring which is in the form of a loop is provided with a force-fitted sleeve (2), a shaft member (3) being disposed rotatably in said sleeve said autonomous assembly being fixed with respect to the chassis by way of a yoke (6) of which the outside leg (7) is made in the form of a clamp, wherein the edges (8, 9) of said clamp can be tightened by a bolt (10), characterised in that cups (4) are crimped at the end of the shaft member (3) and that housed within said clamp is a bracing member (11) which is split in line with the slot between said edges (8, 9), the bracing member (11) comprising a flat (12) permitting the passage of said bolt (10) which fixes said bracing member (11) in respect of rotation when the screw (14) is tightened.

2. A mounting according to claim 1 characterised in that the shaft member (3) and the cups (4) are fixed in respect of rotation by clamping of the bracing member (11) and the shaft member (3) by means of a screw (14) passing through the bracing member (11), the shaft member (3) and the opposite leg (13), on the outside face of which is placed a nut (15).

3. A mounting according to claims 1 and 2 characterised in that on their face which is in contact with the legs (7, 13) and the bracing member (11) the cups (4) have notching means in the form of a concentric ring of triangular section of a raised nature.

4. A mounting according to claim 1 characterised in that a chamfer is provided at the junction of the cups (4) and the ends of the sleeve (2), serving as a housing for toric seals (5) which provide the sealing effect between those two components which are movable relative to each other, thus making it possible to maintain a reserve of lubricant within the sleeve (2).

5. A mounting according to claim 1, characterised in that the legs (7, 13) of the yoke (6) have a flexibility permitting resilient deformation under the action of tightening of the screw (14).

**Patentansprüche**

1. Gelenk für die Befestigung einer Blattfeder, insbesondere für Industriefahrzeuge, wobei jedes gebogene Ende (1) der Blattfeder mit einem im Preßsitz aufgebrachten Ring (2) versehen ist, in den drehbeweglich eine Achse (3) eingreift und wobei diese Untereinheit mit der Karosserie über eine Haube (6) verbunden ist, deren Außenflansch (7) klammerförmig ausgebildet ist, wobei die Ränder (8, 9) der Klammer mittels eines Bolzens (10) zusammendrückbar sind, dadurch gekennzeichnet, daß an den Enden der Achse (3) Federteller (4) eingeklemmt sind und daß im Inneren der Klammer eine Querstrebe (11) angeordnet ist, die in Verlängerung des die Ränder (8, 9) trennenden Schlitzes geschlitzt ist, wobei die Querstrebe (11) eine Abflachung (12) aufweist, die den Durchlaß des Bolzen (10) ermöglicht, der diese Querstreben (11) während des Anziehens der Schraube (14) gegen Drehungen sichert.

2. Gelenk nach Anspruch 1, dadurch gekennzeichnet, daß die Achsen (3) und die Federteller (4) durch Einklemmen der Querstrebe (11) und der Achse (13) mittels einer Schraube (14) gegen Verdrehungen gesichert sind, welche die Querstrebe (11), die Achse (3) und den gegenüberliegenden Flansch (13) durchsetzt, auf dessen Außenfläche eine Mutter (15) angeordnet ist.

3. Gelenk nach Ansprüchen 1 und 2, dadurch gekennzeichnet, daß die Federteller (4) auf ihrer Kontaktfläche mit den Flanschen (7, 13) der Querstrebe (11) Einschnitte aufweisen in Form einer konzentrischen Krone mit dreieckigem reliefartigem Querschnitt.

4. Gelenk nach Anspruch 1, dadurch gekennzeichnet, daß an der Verbindungsstelle der Federteller (4) mit den Enden des Ringes (2) eine Abschrägung vorgesehen ist zur Aufnahme von Ringdichtungen (5), die die Abdichtung zwischen diesen beiden Teilen bei Relativbewegungen gewährleisten, so daß dadurch das Vorhandensein einer Schmiermittelmenge im Inneren des Ringes (2) ermöglicht wird.

5. Gelenk nach Anspruch 1, dadurch gekennzeichnet, daß die Flansche (7, 13) der Haube (6) eine derartige Weichheit aufweisen, daß sie eine elastische Verformung unter der Klemmwirkung der Schraube (14) zulassen.

FIG.1

FIG.2

1